# EUROPÄISCHE PATENTSCHRIFT

(11) **EP 3 224 072 B1**
(45) Veröffentlichungstag und Bekanntmachung des Hinweises auf die Patenterteilung: **01.05.2019**
(21) Anmeldenummer: 15801120.5
(22) Anmeldetag: 24.11.2015
(51) Int. Cl.: B60J 5/10, E05F 15/70, E05F 15/71

(54) **VERFAHREN ZUM BETREIBEN EINER BEWEGUNGSEINRICHTUNG**
METHOD FOR OPERATING A MOVING DEVICE
PROCÉDÉ DE FONCTIONNEMENT D'UN DISPOSITIF DE DÉPLACEMENT

(30) Priorität: 27.11.2014 DE 102014017576
(43) Veröffentlichungstag der Anmeldung: 04.10.2017
(73) Patentinhaber: Audi AG, 85045 Ingolstadt (DE)
(72) Erfinder: HARTMANN, Jürgen, 91468 Gutenstetten (DE); SASSMANNSHAUSEN, Patrick, 85113 Böhmfeld (DE)
(74) Vertreter: Brandt, Kai
(86) Internationale Anmeldenummer: PCT/EP2015/002358
(87) Internationale Veröffentlichungsnummer: WO 2016/082929

(56) Entgegenhaltungen:
- EP-A2- 2 610 692
- DE-A1-102006 038 447
- DE-C1- 19 641 428
- GB-A- 2 307 758

## Beschreibung

Die Erfindung betrifft ein Verfahren zum Betreiben einer Bewegungseinrichtung gemäß dem Oberbegriff des Anspruchs 1. Daneben betrifft die Erfindung ein Kraftfahrzeug.

Die automatisierte Bewegung von Bauteilen zwischen zwei Endpositionen, insbesondere einer geöffneten und einer geschlossenen Position, ist ein wichtiges Komfortmerkmal moderner Kraftfahrzeuge. Als Bauteile kommen hierbei insbesondere Heckklappen, Motorhauben und Türen jeglicher Art in Betracht. Dazu werden Bewegungseinrichtungen eingesetzt, welche eine häufig elektromotorisch betriebene bzw. als Elektromotor ausgebildete Antriebseinheit aufweisen. Zu Beginn der Bewegung muss die Antriebseinheit dabei eine höhere Energie aufwenden, um die Trägheit des Bauelements und in der Bewegungseinrichtung auftretende Reibungskräfte zu überwinden. Dazu wird durch die Antriebseinheit üblicherweise eine feste aufzubringende Loslöseenergie zugeführt.

Diese fest vorgegebene Loslöseenergie führt in der Regel dazu, dass das Bauteil aus wenigstens einer der Endpositionen weitestgehend ruckfrei losgelöst werden kann. Allerdings können bei Startpositionen zwischen den Endpositionen des Bauteils ein merkliches Rucken und Schwingen des Bauteils oder sonstige Unregelmäßigkeiten auftreten, die zu einer Ungleichmäßigkeit der Gesamtbewegung führen. Dies belastet die Mechanik der Bewegungseinrichtung in unnötiger Weise und beeinträchtigt den Bewegungskomfort des Bauteils.

DE 10 2006 038 447 A1 offenbart ein Verfahren zum Öffnen und/oder Schließen einer Klappe eine Kraftfahrzeugs mittels eines Antriebs, welcher derart von der Steuereinheit gesteuert wird, dass die jeweils zur Bewegung der Klappe eingesetzte Kraft in Abhängigkeit von der Winkelstellung der Klappe relativ zum Kraftfahrzeug höchstens um einen vorgebbaren Betrag über der minimal zur Bewegung notwendigen Kraft liegt.

GB 2 307 758 A offenbart eine Klappensteuereinrichtung, umfassend eine Klappe, die sich entlang eines vorgegebenen Wegs zum Verdecken einer Öffnung bewegt und einen Aktuator zum Bewegen der Klappe entlang des Wegs zwischen einer offenen und einer geschlossenen Position.

DE 196 41 428 C1 offenbart eine Einrichtung zum Verschwenken einer klappbaren Haube eines Kraftfahrzeugs, bestehen aus einem am Fahrzeugaufbau und an der klappbaren Haube angelenkten Hydraulikzylinder, über den die Haube geöffnet und geschlossen werden kann.

Der Erfindung liegt damit die Aufgabe zugrunde, ein Verfahren zum Betreiben einer Bewegungsrichtung anzugeben, welches ein Material schonendes Loslösen des Bauteils ermöglicht und einen harmonischen Bewegungsablauf erzeugt.

Diese Aufgabe wird erfindungsgemäß bei einem Verfahren der eingangs genannten Art durch die Merkmale des kennzeichnenden Teils des Anspruchs 1 gelöst.

Der Erfindung liegt die Überlegung zugrunde, dem Bauelement jeweils nur ein solches Maß an Loslöseenergie zuzuführen, das in seiner aktuellen Startposition auch tatsächlich zum Lösen benötigt wird. Die entsprechenden Loslöseenergien sind dabei vorzugsweise werkseitig vorgegeben und dem Verfahren bekannt, insbesondere können diese Werte empirisch ermittelt werden. Dadurch kann sichergestellt werden, dass in jeder Startposition nur diejenige Loslöseenergie von der Antriebseinheit aufgebracht wird, welche für eine harmonische Bewegung benötigt wird, so dass darüber hinaus die Bewegungseinrichtung und ihre Teile, wie Lager und Getriebe, vor Überbeanspruchung geschützt sind. Mithin wird das Entstehen von Überschussenergien, die Ungleichmäßigkeiten der Bewegung zur Folge haben, vermieden.

Dieses Verfahren wird zweckmäßigerweise dadurch weitergebildet, dass die zu verwendende Löseenergie zusätzlich in Abhängigkeit der Richtung der Bewegung gewählt wird. Vor allem bei Bewegungen, welche gegen die Schwerkraft ausgeführt werden, ist eine Berücksichtigung der Bewegungsrichtung von Relevanz. So sollte die Loslöseenergie zweier unterschiedlich gerichteter Bewegungen aus der gleichen Startposition im Falle der Bewegung gegen die auf das Bauteil wirkende Schwerkraft höher gewählt werden. Dadurch kann das Bewegungsverhalten der Bewegungseinrichtung noch weiter optimiert werden.

In einer weiteren vorteilhaften Ausgestaltung ist vorgesehen, dass die zu verwendende Loslöseenergie zusätzlich in Abhängigkeit wenigstens eines die Umgebungsbedingungen beschreibenden Umgebungsparameters, insbesondere der Umgebungstemperatur und/oder der Umgebungsluftfeuchtigkeit, gewählt wird. Diese äußeren Bedingungen können ebenfalls einen Einfluss auf die für einen gleichmäßigen Bewegungsablauf auszuwählende Loslöseenergie haben. So ist bei sehr niedrigen Umgebungstemperaturen, insbesondere unterhalb des Gefrierpunktes, mit erhöhten zu überwindenden Reibungskräften in der Bewegungseinrichtung zu rechnen. Diese resultieren beispielsweise aus verschlechterten Gleiteigenschaften von verwendeten Schmierstoffen in diesem Temperaturbereich. Auch bei diesen Temperaturen in Verbindung mit einer erhöhten Umgebungsluftfeuchtigkeit auftretende Vereisungen, welche die Loslöseenergie erhöhen, können zweckmäßigerweise im Verfahren berücksichtigt werden.

Eine vorteilhafte Weiterbildung des Verfahrens sieht vor, dass wenigstens ein die Loslöseenergie und/oder den zeitlichen Verlauf einer Loslöseleistung bestimmender Antriebsparameter aus einem Kennlinienfeld gewählt wird. Es ist hierbei zum einen denkbar, dass das Kennlinienfeld formelmäßig modelliert ist und das Verfahren daraus die Antriebsparameter berechnet. Zum anderen kann das Kennlinienfeld auch durch eine feste Zuordnung in einer Look-Up-Tabelle, welche in einer Speichereinheit des Kraftfahrzeugs abgelegt ist, verfügbar sein. Als Antriebsparameter kommt jede Eingangsgröße der verwendeten Antriebseinheit in Betracht, welche dazu bestimmt ist die abzugebende Energie oder Leistung zu bestimmen. Vor allen die zeitliche Dauer, über welche eine bestimmte Loslöseleistung durch die Antriebseinheit abgegeben wird und die Loslöseleistung selbst sind bevorzugte Antriebsparameter. Dies ermöglicht, die Zuführung der Loslöseenergie durch Verfahren noch präziser einzustellen.

Diese Ausführungsform des Verfahrens kann dadurch verbessert werden, dass als Antriebsparameter ein Tastverhältnis einer Pulsweitenmodulation und/oder eine anzuwendende Dauer der Pulsweitenmodulation verwendet wird. Da die Antriebseinheit in einem Kraftfahrzeug häufig als Elektromotor ausgebildet ist, wird dieser zweckmäßigerweise durch ein pulsweitenmoduliertes Leistungssignal angesteuert. In dieser Konfiguration zeigt sich das Verfahren besonders effektiv, weil die maßgeblichen Ansteuerungsparameter das Tastverhältnis und/oder die anzuwendende Dauer der Pulsweitenmodulation betreffen und so eine exakte Steuerung der Antriebseinheit ermöglicht ist. Damit ist auch eine Integration des erfindungsgemäßen Verfahrens in bekannte Ansteuerungsverfahren auf einfache Weise umsetzbar, nachdem die Pulsweitenmodulation und deren Dauer oft auch in sonstigen Ansteuerungsvorgängen eingesetzte Ansteuerungsparameter sind. Dies gilt insbesondere für einen an die Zuführung der Loslöseenergie anschließenden weiteren Bewegungsverlauf, worauf im Folgenden noch näher eingegangen wird.

Sämtliche genannten Ausführungsformen des Verfahrens können vorteilhafterweise dadurch ergänzt werden, dass im Anschluss an das Loslösen des Bauteils eine weitere Bewegung zur Endposition durch Vorgabe eines Soll-Bewegungsverlaufs, insbesondere einer Soll-Geschwindigkeit, gesteuert oder geregelt wird. Die Erfindung lässt sich damit auch einfach in bekannte Steuerungs- oder Regelungskonzepte zum Betrieb von Bewegungseinrichtungen integrieren. Dadurch muss der an die Zuführung der Loslöseenergie anschließende Bewegungsverlauf nicht mehr so vorgegeben werden, dass er Reibungskräfte oder Masseträgheit zu überwinden versucht, sondern kann unmittelbar auf das gewünschte Bewegungsprofil ausgelegt werden. Dies erleichtert die Steuerung oder Regelung der weiteren Bewegung zur Endposition, da der Antriebseinheit zuvor genau jene Loslöseenergie zugeführt worden ist, welche für eine gleichmäßige Bewegung aus einer ruhenden Position nötig war. Dies erleichtert insbesondere eine stabile Ausgestaltung regelungstechnischer Maßnahmen erheblich, da beispielsweise Bewegungsunregelmäßigkeiten wie ein Schwingen des Bauteils weitestgehend durch das erfindungsgemäße Verfahren beseitigt sind.

Ferner wird vorzugsweise als Bauteil eine Heckklappe verwendet und in einer maximal geöffneten Position der Heckklappe eine höhere Loslöseenergie verwendet als in einer Zwischenposition. Gerade beim Schließen von Heccklappen, hat es sich als sinnvoll erwiesen, die zuzuführenden Loslöseenergie mit sinkendem Öffnungswinkel zu reduzieren. Ein Kennlinienfeld der Loslöseenergie über den Neigungswinkel der Heckklappe weist dann einen fallenden Verlauf auf. Besonders bei automatisch bewegten Heckklappen ist ein harmonischer Bewegungsablauf von besonderem Interesse, weil die Bewegung nicht nur aus dem Fahrzeuginneren durch den Fahrer wahrgenommen wird, sondern auch von umstehenden Personen bemerkt werden kann. Ein gleichmäßiger Bewegungsablauf der Heckklappe stellt hier ein wichtiges Komfort- und Qualitätsmerkmal des Kraftfahrzeugs als Ganzes dar.

Die der Erfindung zugrunde liegende Aufgabe wird ferner gelöst durch ein Kraftfahrzeug gemäß Anspruch 9. Sämtliche Ausführungen zum Verfahren lassen sich analog auf das Kraftfahrzeug übertragen, so dass auch mit diesem die bereits genannten Vorteile erzielt werden können. In besonders bevorzugter Weise führt die Steuereinheit das Verfahren zur Bewegung einer an das Fahrzeug angebrachten Heckklappe aus.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs in Seitenansicht,
- Fig. 2: einen Ablaufplan eines Ausführungsbeispiels des erfindungsgemäßen Verfahrens, und
- Fig. 3: ein Diagramm eines durch das Verfahren ermittelten Tastverhältnisses und einen anschließenden Verlauf des Tastverhältnisses über die Zeit.

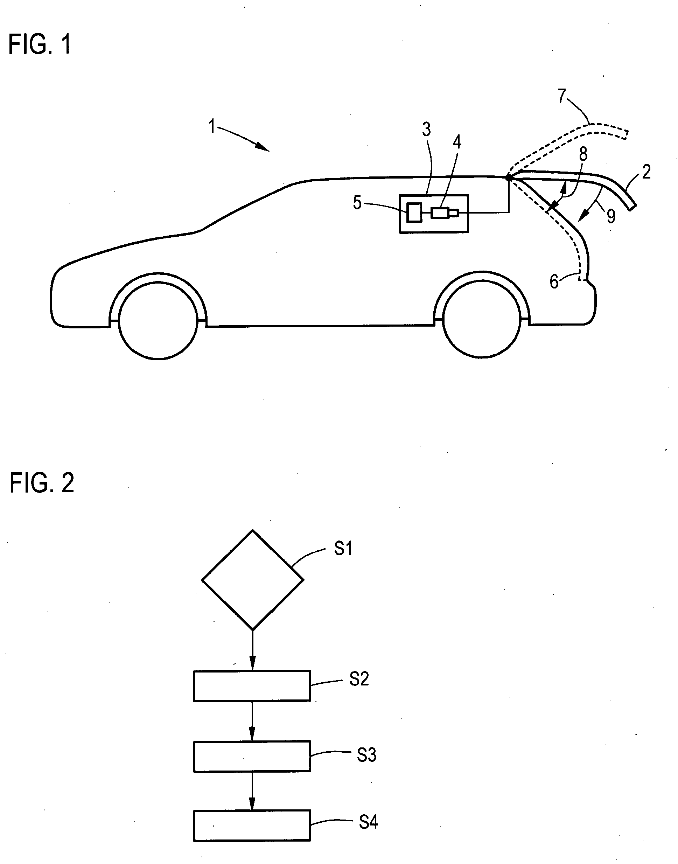

Fig. 1 zeigt in Form einer Prinzipskizze ein erfindungsgemäßes Kraftfahrzeug 1 mit einer Heckklappe 2 sowie eine Bewegungseinrichtung 3 umfassend eine Antriebseinheit 4, welche von einer Steuereinheit 5 gesteuert wird. Andeutungsweise ist daneben die Heckklappe 2 in einer geschlossenen Stellung 6 sowie in einer maximal geöffneten Stellung 7 gezeigt, wobei die dargestellte Position der Heckklappe 2 vorliegend die Startposition ist. Die Stellung 6, 7 sind dabei zugleich Endpositionen. Zusätzlich ist ein Neigungswinkel 8 der Heckklappe 2 bezeichnet.

Fig. 2 zeigt einen Ablaufplan eines Ausführungsbeispiels des erfindungsgemäßen Verfahrens. Ein Schritt S1 bezeichnet hier den Beginn des Verfahrens, wenn eine Bewegung der Heckklappe 2 ausgeführt werden soll, beispielsweise durch Betätigung eines Bedienelements. In einem Schritt S2 werden dann die Antriebsparameter in Abhängigkeit des die Startposition repräsentierenden, aktuellen Neigungswinkels 8 und einer gewünschten Richtung 9 der Bewegung gewählt. Im vorliegenden Fall kann dies z. B. dadurch realisiert werden, dass für zwei unterschiedliche Richtungen 9 jeweils eine Look-Up-Tabelle in der Steuereinheit 5 abgelegt ist, welche verschiedenen Intervallen von Neigungswinkeln 8 Antriebsparameter zuordnet. Das Ausführungsbeispiel ist hier so gewählt, dass die Antriebseinheit 4 durch pulsweitenmodulierte Leistungssignale angesteuert wird. Bei dem gegebenen Neigungswinkel 8 und der gewünschten Richtung 9 würde eine sinnvolle Kombination von Antriebsparametern ein Tastverhältnis der pulsweiten Modulation von 45 % und einer Dauer der Anwendung dieses Tastverhältnisses von 200 ms darstellen. Befindet sich die Heckklappe 2 in ihrer maximal geöffneten Stellung 7 könnte eine geeignete Kombination von Antriebsparametern z. B. ein Tastverhältnis von 90 % bei einer Dauer von 600 ms sein.

Das durch diese Kombination von Antriebsparametern definierte pulsweitenmodulierte Leistungssignal wird in einem Schritt S3 der Antriebseinheit 4 zugeführt. Die auf den Neigungswinkel 8 und die gewünschte Richtung 9 abgestimmte, aus dem Leistungssignal resultierende, Loslöseenergie wird damit so schnell wie möglich an die Heckklappe 2 übertragen, ohne dass zeitliche Verzögerungen auftreten, welche z. B. bei einem vollständig auf einen Sollwert geregelten Bewegungsablauf entstehen.

Nach Ablauf der als Antriebsparameter vorgegebenen Dauer des pulsweitenmodulierten Leistungssignals wird in einem Schritt S4 für die weitere Bewegung der Heckklappe 2 in ihre Endposition ein geeignetes Steuerungs- oder Regelungsverfahren ausgeführt. Dafür ist ein wiederum vom Neigungswinkel 8 abhängiger Verlauf des Tastverhältnisses, welches die Geschwindigkeit der Heckklappe 2 repräsentiert, vorgegeben.

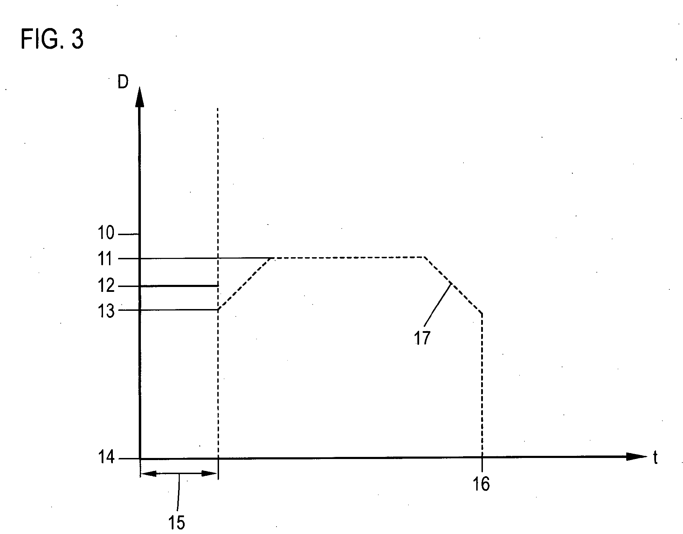

Fig. 3 zeigt ein Diagramm mit einem beispielhaften zeitlich Verlauf eines aus der Anwendung des Verfahrens resultierendes Loslösetastverhältnisses 12 sowie ein weiteres im Rahmen von Steuerungs- oder Regelungsmaßnahmen vorgegebenes Tastverhältnis 17, welche beide ein Maximaltastverhältnis 10 von 100 % nicht überschreiten. Dabei wird zum Startzeitpunkt 14 des Verfahrens das Loslösetastverhältnis 12 vorgegeben, welches für die Dauer 15 an der Antriebseinheit 4 anliegt. Danach ist das Tastverhältnis 17 vorgegeben, welches mit einem Mindestverhältnis 13 beginnt und zu einem Nominaltastverhältnis 11 linear ansteigt und dort konstant bleibt. In der Nähe der Endposition fällt das Tastverhältnis 17 dann wieder auf das Mindestverhältnis 13 ab, um an einem Totpunkt 16 schließlich bei null zu liegen. So werden über die gesamte Bewegung Ungleichmäßigkeiten verhindert und eine harmonisch anmutende Bewegung der Heckklappe 2 in die Endposition erreicht.

## Patentansprüche

1. Verfahren zum Betreiben einer Bewegungseinrichtung (3) für ein bewegliches Bauteil eines Kraftfahrzeugs (1), insbesondere eine Heccklappe (2), wobei das Bauteil durch eine Antriebseinheit (4) der Bewegungseinrichtung (3) zwischen zwei Endpositionen bewegbar ist, wobei im Anschluss an ein Loslösen des Bauteils eine weitere Bewegung zur Endposition durch Vorgabe eines Soll-Bewegungsverlaufs gesteuert oder geregelt wird,
**dadurch gekennzeichnet,**
**dass** eine zum Loslösen des Bauteils zu Beginn einer Bewegung aus einer Startposition zu verwendende Loslöseenergie für die Antriebseinheit (4) in Abhängigkeit von der Startposition gewählt wird.

2. Verfahren nach Anspruch 1,
**dadurch gekennzeichnet,**
**dass** die zu verwendende Loslöseenergie zusätzlich in Abhängigkeit der Richtung (9) der Bewegung gewählt wird.

3. Verfahren nach Anspruch 1 oder 2,
**dadurch gekennzeichnet,**
**dass** die zu verwendende Loslöseenergie zusätzlich in Abhängigkeit wenigstens eines die Umgebungsbedingungen beschreibenden Umgebungsparameters, insbesondere der Umgebungstemperatur und/oder der Umgebungsluftfeuchtigkeit, gewählt wird.

4. Verfahren nach einem der vorhergehenden Ansprüche,
**dadurch gekennzeichnet,**
**dass** wenigstens ein die Loslöseenergie und/oder den zeitlichen Verlauf einer Loslöseleistung bestimmender Antriebsparameter aus einem Kennlinienfeld gewählt wird.

5. Verfahren nach Anspruch 4,
**dadurch gekennzeichnet,**
**dass** als Antriebsparameter ein Tastverhältnis einer Pulsweitenmodulation und/oder eine anzuwendende Dauer (15) der Pulsweitenmodulation verwendet wird.

6. Verfahren nach einem der vorhergehenden Ansprüche,
**dadurch gekennzeichnet,**
**dass** als Soll-Bewegungsverlauf eine Soll-Geschwindigkeit vorgegeben wird.

7. Verfahren nach einem der vorhergehenden Ansprüche,
**dadurch gekennzeichnet,**
**dass** als Bauteil eine Heckklappe (2) verwendet wird und in einer maximal geöffneten Stellung (7) der Heckklappe (2) eine höhere Loslöseenergie verwendet wird als in einer Zwischenposition.

8. Kraftfahrzeug (1), umfassend eine Bewegungseinrichtung (3) für ein bewegliches Bauteil, wobei das Bauteil durch eine Antriebseinheit (4) der Bewegungseinrichtung (3) zwischen zwei Endpositionen bewegbar ist, und eine Steuereinheit (5), die ein Verfahrens nach einem der Ansprüche 1 bis 7 durchführt.

9. Kraftfahrzeug (1) nach Anspruch 8,
**dadurch gekennzeichnet,**
**dass** das Bauteil eine Heckklappe (2) ist.

## Claims

1. Method for operating a movement device (3) for a movable component of a motor-vehicle (1), in particular a tailgate (2), wherein the component can be moved by a drive unit (4) of the movement device (3) between two end positions, wherein at the culmination of a disengaging of the component a further movement to the end position is controlled or regulated by the pre-definition of a target movement course,
**characterised in**
**that** a disengaging energy for the drive unit (4) to be used for disengaging the component at the beginning of a movement out of a start position is selected depending on the start position.

2. Method according to claim 1,
**characterised in**
**that** the disengaging energy to be used is selected additionally depending on the direction (9) of the movement.

3. Method according to claim 1 or 2,
**characterised in**
**that** the disengaging energy to be used is selected additionally depending on at least one environmental parameter describing the environmental conditions, in particular the environmental temperature and/or the environmental air humidity.

4. Method according to any of the preceding claims,
**characterised in**
**that** at least one drive parameter determining the disengaging energy and/or the temporal course of a disengaging performance is selected from a field of characteristics.

5. Method according to claim 4,
**characterised in**
**that** as drive parameter is used a duty ratio of a pulse width modulation and/or a duration (15) to be used of the pulse width modulation.

6. Method according to any of the preceding claims,
**characterised in**
**that** as target movement course a target speed is predetermined.

7. Method according to any of the preceding claims,
**characterised in**
**that** as component a tailgate (2) is used and in a maximum opened position (7) of the tailgate (2) a greater disengaging energy is used than in an interim position.

8. Motor vehicle (1), comprising a movement device (3) for a movable component, where the component can be moved by a drive unit (4) of the movement device (3) between two end positions, and a control unit (5) which carries out a method according to any of claims 1 to 7.

9. Motor vehicle (1) according to claim 8,
**characterised in**
**that** the component is a tailgate (2).

## Revendications

1. Procédé de fonctionnement d'un dispositif de déplacement (3) pour un composant mobile d'un véhicule automobile (1), en particulier un hayon (2), dans lequel le composant peut être déplacé par une unité d'entraînement (4) du dispositif de déplacement (3) entre deux positions d'extrémité, dans lequel, suite à un détachement du composant, un autre déplacement vers la position d'extrémité est commandé ou réglé par prédéfinition d'une courbe de déplacement de consigne,
**caractérisé en ce**
**qu'**une énergie de détachement à utiliser pour le détachement du composant au début d'un déplacement hors d'une position de départ est sélectionnée pour l'unité d'entraînement (4) en fonction de la position de départ.

2. Procédé selon la revendication 1,
**caractérisé en ce**
**que** l'énergie de détachement à utiliser est sélectionnée en plus en fonction de la direction (9) du déplacement.

3. Procédé selon la revendication 1 ou 2,
**caractérisé en ce**
**que** l'énergie de détachement à utiliser est sélectionnée en plus en fonction d'au moins un paramètre d'environnement décrivant les conditions d'environnement, en particulier de la température ambiante et/ou de l'humidité de l'air ambiant.

4. Procédé selon l'une quelconque des revendications précédentes,
**caractérisé en ce**
**qu'**au moins un paramètre d'entraînement déterminant l'énergie de détachement et/ou la courbe dans le temps d'une puissance de détachement est sélectionné à partir d'un réseau de courbes caractéristiques.

5. Procédé selon la revendication 4
**caractérisé en ce**
**qu'**un rapport cyclique d'une modulation de largeur d'impulsion et/ou une durée à appliquer (15) de la modulation de largeur d'impulsion est utilisé en tant que paramètre d'entraînement.

6. Procédé selon l'une quelconque des revendications précédentes,
**caractérisé en ce**
**qu'**une vitesse de consigne est prédéfinie en tant que courbe de déplacement de consigne.

7. Procédé selon l'une quelconque des revendications précédentes,
**caractérisé en ce**
**qu'**un hayon (2) est utilisé en tant que composant et une plus grande énergie de détachement est utilisée dans une position ouverte au maximum (7) du hayon (2) que dans une position intermédiaire.

8. Véhicule automobile (1), comprenant un dispositif de déplacement (3) pour un composant mobile, dans lequel le composant peut être déplacé par une unité d'entraînement (4) du dispositif de déplacement (3) entre deux positions d'extrémité, et une unité de commande (5) qui met en oeuvre un procédé selon l'une quelconque des revendications 1 à 7.

9. Véhicule automobile (1) selon la revendication 8,
**caractérisé en ce**
**que** le composant est un hayon (2).
